# DEMANDE DE BREVET EUROPEEN

(11) **EP 0 758 583 A2**
(43) Date de publication de la demande: **19.02.1997**
(21) Numéro de dépôt: 96401773.5
(22) Date de dépôt: 13.08.1996
(51) Int. Cl.: B32B 17/10, C03C 27/12

(54) **Vitrage feuilleté à propriétés de réflexion du rayonnement infrarouge**

(30) Priorité: 16.08.1995 DE 19529943
(71) Demandeur: SAINT-GOBAIN VITRAGE, F-92400 Courbevoie (FR)
(72) Inventeur: Frost, Thorsten, 52477 Alsdorf (DE); Jansen, Manfred, 52511 Geilenkirchen (DE); Schilde, Heinz, 52146 Würselen (DE)
(74) Mandataire: Renous Chan, Véronique

(57) **Abrégé**

Dans le cas d'un vitrage feuilleté constitué de deux feuilles de verre (1, 2) et d'une pellicule support transparente (4) unie aux deux feuilles de verre (1, 2) par des couches de colle (5, 6) et comportant une couche superficielle (3) réfléchissant le rayonnement infrarouge, une couche de colle (5) présente une épaisseur de 50 µm maximum. L'autre couche de colle (6) a de préférence une épaisseur de 0,76 mm.

## Description

La présente invention concerne un vitrage feuilleté réfléchissant le rayonnement infrarouge constitué de deux feuilles de verre, d'une pellicule support transparente en polymère résistant à la traction, disposée entre les deux feuilles de verre et pourvue d'une couche superficielle réfléchissant le rayonnement infrarouge, et de deux couches de colle, à l'aide desquelles la pellicule revêtue est unie aux deux feuilles de verre.

Des vitrages feuilletés de ce type sont par exemple connus par les documents DE 2 344 616 A1, EP 0 371 949 A1 et EP 0 391 165 A2. Ils sont particulièrement appropriés comme vitrages calorifuges pour automobiles. La pellicule support pour la couche superficielle réfléchissant le rayonnement infrarouge peut en principe être constituée de différentes matières, comme par exemple le polyester, le polycarbonate, l'acétate de cellulose, l'acrylate ou le polychlorure de vinyle. Des pellicules support en polyéthylène téréphtalate (PET) se sont révélées particulièrement appropriées dans ce but. La couche superficielle réfléchissant le rayonnement infrarouge peut aussi en principe être formée de différentes façons. On utilise en général habituellement des couches multiples comportant une ou plusieurs minces couches d'argent en tant que couches fonctionnelles proprement dites, qui sont noyées entre des couches métalliques et/ou diélectriques, ces couches étant déposées de préférence par le procédé de pulvérisation cathodique assistée par champ magnétique.

Pour la fabrication des vitrages feuilletés, les pellicules support pourvues de la couche superficielle sont unies par l'intermédiaire de deux couches de colle thermoplastiques aux deux feuilles de verre suivant le processus utilisé habituellement pour les vitrages feuilletés, des pellicules en polyvinylbutyral étant en règle générale utilisées comme couches de colle thermoplastiques. Les pellicules de polyvinylbutyral thermoplastiques sont avantageusement préalablement unies à la pellicule support revêtue pour former un stratifié, mais les différentes pellicules peuvent, bien entendu également, être préparées séparément et le paquet de couches peut n'être constitué que lors de la fabrication du vitrage feuilleté. Lors du processus d'union ou d'assemblage proprement dit, le paquet de couches est tout d'abord débarrassé de l'air qu'il contient et est ensuite compressé dans un autoclave, à chaud et sous pression, à savoir habituellement sous une température de 120 à 150°C et une pression de 8 à 15 atm.

Des vitrages feuilletés de ce type ont souvent, en cas d'incidence de lumière oblique, un aspect optiquement dérangeant du fait que la surface réfléchissant le rayonnement infrarouge n'apparaît pas en réflexion uniformément plane, mais présente un effet de retrait ou aussi un effet de martelage. Cet effet est connu et est aussi décrit dans la littérature. On sait également que cet effet de martelage repose de façon évidente sur un processus de retrait de la pellicule support et/ou des pellicules de colle thermoplastiques pendant l'échauffement lors du processus d'union ou d'assemblage.

Pour éviter cet effet optiquement dérangeant, l'utilisation de pellicules support qui ne présentent qu'un très faible degré de retrait est proposée dans le document US-PS 4 456 736.

Il est proposé dans le document EP 0 371 949 A1 de contrer l'effet mentionné en modifiant la couche superficielle réfléchissant le rayonnement infrarouge de telle sorte que la réflexion soit limitée dans le domaine du spectre visible à 2% maximum, ou mieux à moins de 0,7%. La modification de la couche causée par le retrait reste dans ce cas certes entièrement présente, mais l'effet de retrait ne sera alors plus visible dans une mesure dérangeante pour l'oeil.

Egalement pour éviter cet effet optiquement dérangeant, le document EP 0 544 717 B1 propose l'utilisation de couches de colle spéciales. Suivant cette proposition, seront utilisées comme couches de colle des pellicules de polyvinylbutyral qui, sur la face adjacente à la couche réfléchissant le rayonnement infrarouge, présentent une faible ondulation superficielle définie.

Les propositions connues pour éviter l'effet optiquement dérangeant mentionné ci-dessus ont chacune des inconvénients spécifiques, et le problème de l'effet de martelage dans le cas des vitrages feuilletés du type spécifié n'a également pas été résolu jusqu'à présent de manière satisfaisante dans le cas de la mise en oeuvre de ces propositions connues.

L'invention a donc pour but de procurer un vitrage feuilleté du type mentionné dans le préambule de telle sorte que des effets optiquement dérangeants causés par un retrait d'une couche polymérique disposée entre les feuilles de verre au silicate soient évités à l'aide de mesures relativement simples.

Suivant l'invention, ce but est atteint par le fait qu'au moins une des couches de colle présente une épaisseur maximum d'environ 50 µm.

Il a été constaté et confirmé par des essais que les effets optiquement dérangeants observés peuvent être complètement ou au moins en grande partie évités lorsque la pellicule support revêtue est collée d'un côté au moins relativement solidement à une feuille de verre à l'aide d'une très mince couche de colle. De cette façon, la pellicule support ne peut plus se déformer ou se rétracter puisque cela est empêché par l'union solide à une des deux feuilles de verre. Le fait que les processus de retrait, qui sont responsables suivant l'expérience au niveau mondial de l'effet de martelage, se déroulent principalement dans la pellicule support même pourvue de la couche ou bien dans les couches de colle ne joue dans ce cas aucun rôle. Il est notamment connu, justement dans le cas de pellicules de polyvinylbutyral, que ces pellicules sont toujours soumises à des contraintes internes et qu'elles se relâchent et se déforment sous l'effet de la chaleur. Il n'est par conséquent pas exclus que les processus de retrait responsables de l'effet se déroulent principalement dans les couches de polyvinylbutyral et soient de là transférés à la pellicule support. Les effets dérangeants causés de cette façon sont également évités par les mesures de l'invention.

Dans le cas des vitrages feuilletés connus du type spécifié, on utilise pour les deux couches de colle à chaque fois les pellicules de polyvinylbutyral utilisées de manière générale pour la fabrication des vitrages feuilletés, avec l'épaisseur usuelle de 0,38 mm. Il s'est avéré que le but recherché selon l'invention est également atteint lorsqu'une seule des deux couches de colle se présente sous une forme extrêmement mince et lorsqu'une pellicule de colle d'épaisseur usuelle est utilisée pour l'autre couche de colle. Pour l'autre couche de colle, on peut en particulier aussi utiliser une pellicule de polyvinylbutyral de 0,76 mm d'épaisseur. Une épaisseur totale de la couche de polyvinylbutyral de 0,76 mm est prescrite, par exemple, dans le cas de pare-brise, pour des raisons biomécaniques.

En principe, toutes les matières connues en tant que couches de colle dans le cas d'un vitrage feuilleté normal peuvent être prises en considération pour la couche de colle extrêmement mince et pour l'autre couche de colle. En particulier, les matières éprouvées telles que les polyvinylbutyrals thermoplastiques et les polyuréthannes thermoplastiques peuvent être utilisées à cette fin. Dans tous les cas, il faut utiliser des matières thermoplastiques afin que le procédé de fabrication habituel puisse être repris sans modification.

Dans un développement avantageux de l'invention, l'épaisseur de la couche de colle mince est de 1 à 30 µm, ou mieux de 5 à 10 µm. Dans ces conditions, une fixation particulièrement bonne de la pellicule support à une feuille de verre est obtenue.

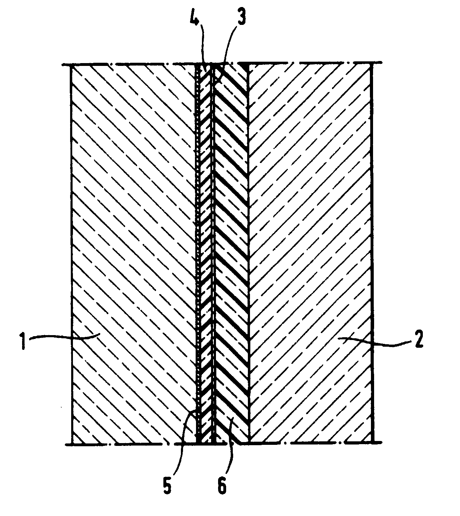

Un exemple de réalisation de l'invention sera décrit plus en détail ci-après avec référence au dessin annexé.

Le dessin montre une représentation en vue en coupe fragmentaire d'un vitrage feuilleté constitué selon l'invention. Des particularités, qui ne sont pas importantes pour la réalisation de l'invention et sont généralement connues, comme par exemple la constitution spéciale de la couche réfléchissant le rayonnement infrarouge, la disposition de couches d'agent adhésif, la composition de la pellicule support, des mesures destinées à empêcher la corrosion au niveau du bord de la couche réfléchissant le rayonnement infrarouge, etc., ne sont pas décrites puisqu'elles font partie de la technique connue.

Le vitrage feuilleté comprend les deux feuilles de verre 1, 2, par exemple chacune en verre flotté de 3 mm d'épaisseur, la pellicule support 4 pourvue de la couche superficielle 3 réfléchissant le rayonnement infrarouge, la couche de colle mince 5 et une couche de colle 6 relativement épaisse, qui unissent la pellicule 4 aux deux feuilles de verre. La pellicule support 4 est une pellicule par exemple d'environ 50 µm d'épaisseur en polyéthylène téréphtalate. La pellicule support 4 est pourvue sur une face d'une couche multiple réfléchissant le rayonnement infrarouge, la couche fonctionnelle proprement dite à l'intérieur de la couche multiple étant constituée d'argent. La couche de colle 5 unissant la pellicule support 4 à la feuille de verre 1 est constituée de polyvinylbutyral thermoplastique et a une épaisseur de 10 µm. La couche de colle 6 sur l'autre face de la pellicule support 4 a une épaisseur de 760 µm et est également constituée de polyvinylbutyral thermoplastique. La pellicule support 4 revêtue a été stratifiée avec une pellicule de 0,76 mm d'épaisseur en polyvinylbutyral au cours d'une étape de travail précédente et a été revêtue sur l'autre face d'une pellicule de colle de 10 µm d'épaisseur. Les deux feuilles de verre 1, 2 sont unies l'une à l'autre à l'aide de ce stratifié préparé de cette manière dans un autoclave à une température de 140°C et sous 12 atm. de surpression.

## Revendications

1. Vitrage feuilleté à propriétés de réflexion du rayonnement infrarouge constitué de deux feuilles de verre, d'une pellicule support transparente en polymère résistant à la traction, disposée entre les deux feuilles de verre et pourvue d'une couche superficielle réfléchissant le rayonnement infrarouge, et de deux couches de colle, à l'aide desquelles la pellicule support revêtue est unie aux deux feuilles de verre, caractérisé en ce qu'au moins une couche de colle (5) présente une épaisseur de 50 µm maximum.

2. Vitrage feuilleté suivant la revendication 1, caractérisé en ce que la couche de colle (5) présente une épaisseur de 1 à 30 µm, ou mieux de 5 à 10 µm.

3. Vitrage feuilleté suivant la revendication 1 ou 2, caractérisé en ce que l'autre couche de colle (6) présente une épaisseur de 0,3 à 0,8 mm.

4. Vitrage feuilleté suivant les revendications 1 à 3, caractérisé en ce que les couches de colle sont constituées d'un polymère thermoplastique tel du polyvinylbutyral ou du polyuréthanne.

5. Vitrage feuilleté suivant les revendications 1 à 4, caractérisé en ce que la pellicule support (4) est constituée de polyéthylène téréphtalate.

6. Vitrage feuilleté suivant les revendications 1 à 5, caractérisé en ce que la couche réfléchissant le rayonnement infrarouge (3) est une couche multiple fabriquée suivant le procédé de la pulvérisation cathodique et comportant au moins une couche d'argent en tant que couche fonctionnelle.
